# FASCICULE DE BREVET EUROPEEN

(11) **EP 3 026 767 B1**
(45) Date de publication et mention de la délivrance du brevet: **26.07.2017**
(21) Numéro de dépôt: 15196363.4
(22) Date de dépôt: 25.11.2015
(51) Int. Cl.: H02G 7/05

(54) **DISPOSITIF D'ANCRAGE POUR ANCRER UN CÂBLE DE DIAMÈTRE PRÉDÉTERMINÉ À UN SUPPORT**
VERANKERUNGSVERFAHREN ZUM VERANKERN EINES KABELS MIT EINEM BESTIMMTEN DURCHMESSER IN EINER HALTERUNG
ANCHORING DEVICE FOR ANCHORING A CABLE OF A PREDETERMINED DIAMETER TO A SUPPORT

(30) Priorité: 26.11.2014 FR 1461534
(43) Date de publication de la demande: 01.06.2016
(73) Titulaire: SAAE MALICO Connectors International, en abrégé "SM-CI", 27000 Evreux (FR)
(72) Inventeur: ALLAIRE, Xavier, 27930 GUICHAINVILLE (FR); HERPIN, Ludovic, 27220 GROSSOEUVRE (FR)
(74) Mandataire: Santarelli

(56) Documents cités:
- EP-A1- 0 407 284
- FR-A1- 2 958 461
- US-A- 1 984 241
- US-A1- 2008 193 096

## Description

L'invention concerne l'ancrage entre un câble de ligne aérienne et un support tel qu'un poteau muni d'une traverse, en particulier pour les câbles qui ne doivent pas être courbés au-delà d'un rayon de courbure relativement grand, par exemple les câbles dont l'âme est formée par des fibres optiques.

On sait qu'un tel dispositif d'ancrage comporte classiquement un organe d'immobilisation pour immobiliser le câble et un organe de liaison pour relier l'organe d'immobilisation au support.

On connait déjà, notamment par la demande de brevet japonais 2007017858 et par la demande de brevet français 2958461, un tel dispositif qui comporte un organe d'immobilisation du câble présentant un tambour autour duquel on fait faire au câble plusieurs tours puis on fait passer le câble dans un taquet de retenue de sorte que si l'on tire sur le côté du câble opposé à celui en place dans le taquet de retenue, le câble se serre sur le tambour et est ainsi immobilisé vis-à-vis de l'organe d'immobilisation.

Ces dispositifs sont assez complexes d'utilisation, car le tambour est associé à des éléments de maintien du câble autour du tambour qui rendent difficile la mise en place du câble. Un dispositif similaire est également décrit dans le document EP407284.

L'invention vise à fournir un dispositif d'accrochage du même genre mais plus performant.

L'invention propose à cet effet un dispositif d'ancrage pour ancrer un câble de diamètre prédéterminé à un support, comportant un organe d'immobilisation pour immobiliser le câble et un organe de liaison pour relier l'organe d'immobilisation au support, caractérisé en ce que :
- l'organe d'immobilisation présente une gorge annulaire de réception du câble, orientée radialement et débouchant sur la périphérie de l'organe d'immobilisation, laquelle gorge est située autour d'un moyeu et entre une première joue et une seconde joue s'étendant chacune à partir du moyeu, laquelle gorge est délimitée par une surface de fond faisant partie du moyeu, par une première surface latérale faisant partie de la première joue et s'étendant entre la surface de fond et la périphérie de l'organe d'immobilisation et par une seconde surface latérale faisant partie de la seconde joue et s'étendant entre la surface de fond et la périphérie de l'organe d'immobilisation, la première surface latérale et la seconde surface latérale étant en regard et à distance l'une de l'autre ; laquelle gorge annulaire comporte un secteur de maintien et un secteur de transition : dans l'ensemble du secteur de maintien la gorge a une largeur, c'est-à-dire l'écart entre la première surface latérale et la seconde surface latérale, qui correspond audit diamètre prédéterminé du câble, et dans l'ensemble du secteur de maintien la gorge a une profondeur, c'est-à-dire l'écart entre la surface de fond et la périphérie de l'organe d'immobilisation, qui est au moins égale à deux fois ledit diamètre prédéterminé du câble, de sorte que deux portions dudit câble disposées dans le secteur de maintien sont superposées ; et dans ledit secteur de transition la première joue est interrompue de sorte qu'elle permet audit câble de transiter avec un décalage axial entre un emplacement où il est externe à la première joue et un emplacement où il est dans la gorge contre la surface de fond ; et
- l'organe d'immobilisation et l'organe de liaison sont configurés pour que l'organe d'immobilisation reçoive ledit câble avec successivement, entre un côté lâche et un côté tendu, une première portion qui passe par le secteur de transition et rejoint le secteur de maintien, puis une deuxième portion faisant un tour complet autour du moyeu en étant contre la surface de fond dans le secteur de maintien, puis dans le secteur de maintien une troisième portion recouvrant la deuxième portion puis une quatrième portion quittant l'organe d'immobilisation, grâce à quoi une traction exercée sur la quatrième portion dans le sens qui sollicite le câble à s'éloigner de l'organe d'immobilisation, fait que la troisième portion plaque sur la surface de fond le tronçon de la deuxième portion recouvert par la troisième portion.

Le tronçon de la deuxième portion ainsi plaqué contre la surface de fond ne peut pas glisser vis-à-vis de l'organe d'immobilisation ; et donc le câble est immobilisé (il ne peut pas glisser sous l'effet de l'effort de traction exercé).

Du fait que dans l'organe d'immobilisation du dispositif selon l'invention, il n'y a au maximum que deux portions de câble qui peuvent être côte-à-côte, au niveau du secteur de transition, l'organe d'immobilisation est particulièrement compact suivant la direction axiale.

Ainsi, sur un même support, il est possible de disposer côte-à-côte davantage de dispositifs selon l'invention que de dispositifs antérieurs tels que ceux susmentionnés.

Au surplus, la mise en place du câble dans l'organe d'immobilisation est particulièrement simple tandis que l'organe d'immobilisation offre une excellente tenue du câble en le sollicitant de façon particulièrement douce puisqu'il n'y a pas de taquet de retenue du câble.

Selon des caractéristiques avantageuses :
- au moins dans le secteur de maintien au moins une des première joue et seconde joue comporte des lamelles flexibles de centrage dirigées chacune vers l'intérieur et vers la surface de fond, grâce à quoi l'organe d'immobilisation peut immobiliser des câbles dont le diamètre est plus petit que ledit diamètre prédéterminé ;
- dans l'organe d'immobilisation, une patte de rattachement s'étend à partir d'un bord périphérique d'au moins l'une desdites première joue et seconde joue ;
- dans l'organe d'immobilisation, une patte de rattachement s'étend à partir d'un bord périphérique de chacune desdites première joue et seconde joue ;
- l'organe de liaison et chaque dite patte de rattachement sont configurés pour que l'organe de liaison soit orienté vis-à-vis de l'organe d'immobilisation suivant une direction prédéterminée passant dans ladite gorge ;
- ledit organe de liaison comporte un corps en forme d'épingle à cheveux présentant à l'une de ses extrémités une première tête et à l'autre extrémité une seconde tête ; et chaque dite patte de rattachement forme un logement pour recevoir la première tête et la seconde tête ;
- ledit secteur de maintien a une extension angulaire comprise entre 45° et 135° ;
- le dispositif d'immobilisation comporte une rampe le long dudit secteur de transition ;
- ladite rampe comporte une paroi orientée radialement qui se raccorde à la première joue à la limite entre le secteur de maintien et le secteur de transition, laquelle paroi s'incurve vers l'extérieur à partir de sa jonction avec la première joue ;
- ladite rampe comporte une paroi orientée axialement entre ledit moyeu et ladite paroi orientée radialement ;
- ladite surface de fond de la gorge présente un renfoncement dans ledit secteur de transition ; et/ou
- ledit secteur de transition a une extension angulaire comprise entre 35° et 105°.

L'exposé de l'invention sera maintenant poursuivi par la description détaillée d'exemples de réalisation, donnée ci-après à titre illustratif et non limitatif, en référence aux dessins annexés, sur lesquels :
- la figure 1 est une vue en perspective d'un dispositif selon l'invention, monté sur un support, en configuration d'utilisation, c'est-à-dire avec un câble immobilisé par l'organe d'immobilisation et avec l'organe de liaison qui relie l'organe d'immobilisation au support ;
- la figure 2 est une vue semblable à la figure 1, mais sans montrer le support et en agrandissement ;
- la figure 3 est une vue schématique en élévation prise du même côté que la figure 2, montrant uniquement la surface de fond de la gorge de l'organe d'immobilisation et le câble enroulé autour de cette surface de fond ;
- la figure 4 est une vue en perspective prise en bout depuis le côté du dispositif d'ancrage opposé à l'organe de liaison ;
- la figure 5 est une vue semblable à la figure 2, mais prise sous un autre angle ;
- la figure 6 est une vue en élévation du seul dispositif d'ancrage, prise depuis le côté que l'on voit à gauche sur la figure 5 ;
- la figure 7 est un agrandissement partiel de la figure 2 autour des organes de rattachement entre l'organe d'immobilisation et l'organe de liaison ;
- la figure 8 est une vue semblable à la figure 2 mais montrant le dispositif d'ancrage tel qu'il est fourni à l'utilisateur, avec l'organe d'immobilisation et l'organe de liaison qui ne sont pas fixés l'un à l'autre ; et
- la figure 9 est une vue en perspective d'une variante du dispositif d'ancrage selon l'invention dans laquelle l'une des extrémités de l'anse formant l'organe de liaison est venue de matière avec l'organe d'immobilisation.

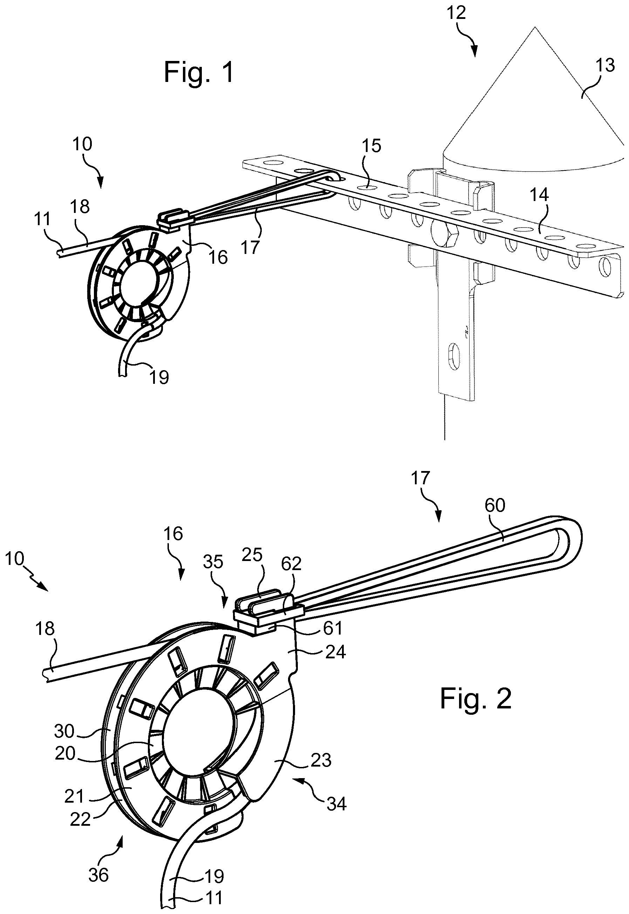

Le dispositif d'ancrage 10 illustré sur les figures 1 à 8 est prévu pour ancrer un câble 11 à un support 12, ici un poteau téléphonique 13 sur lequel est fixée une traverse 14 dans laquelle sont ménagés des trous 15.

Le dispositif d'ancrage 10 comporte un organe d'immobilisation 16 et un organe de liaison 17.

Le câble 11 est disposé dans l'organe d'immobilisation 16 entre un côté tendu 18 et un côté lâche 19.

Le côté tendu 18 rejoint un autre dispositif d'ancrage monté sur un autre support. Le côté lâche 19 rejoint un autre dispositif d'ancrage monté sur le même poteau téléphonique 13. Le câble 11 chemine ainsi le long des supports en étant soutenu sur chaque support par deux dispositifs d'ancrage.

L'organe d'immobilisation 16 est prévu pour retenir le câble 11 lorsque s'exerce sur le côté tendu 18 un effort tendant à éloigner le câble 11 de l'organe d'immobilisation 16.

On observera qu'au voisinage de l'organe d'immobilisation 16, le côté tendu 18 du câble 11 est aligné avec l'organe de liaison 17.

Ainsi qu'expliqué plus en détails ultérieurement, le câble 11 est mis en place dans l'organe d'immobilisation 16 alors que l'organe de liaison 17 n'est pas rattaché à l'organe d'immobilisation 16 ; et la mise en place de l'organe de liaison 17 s'effectue en faisant passer l'une de ses extrémités dans un trou 15 de la traverse 14 puis en rattachant cette extrémité à l'organe d'immobilisation 16.

D'une façon générale, l'organe d'immobilisation 16 comporte un moyeu 20, une première joue 21 et une seconde joue 22 s'étendant chacune à partir du moyeu 20, une rampe 23 s'étendant à partir du moyeu 20 et de la première joue 21, une première patte de rattachement 24 s'étendant à partir de la première joue 21 et une seconde patte de rattachement 25 s'étendant à partir de la seconde joue 22.

Grâce au moyeu 20, à la première joue 21 et à la seconde joue 22, l'organe d'immobilisation 16 présente une gorge annulaire 30 de réception du câble 11. La gorge annulaire 30 est située autour du moyeu 20 et entre la première joue 21 et la seconde joue 22.

La gorge annulaire 30 est orientée radialement et débouche sur la périphérie de l'organe d'immobilisation 16.

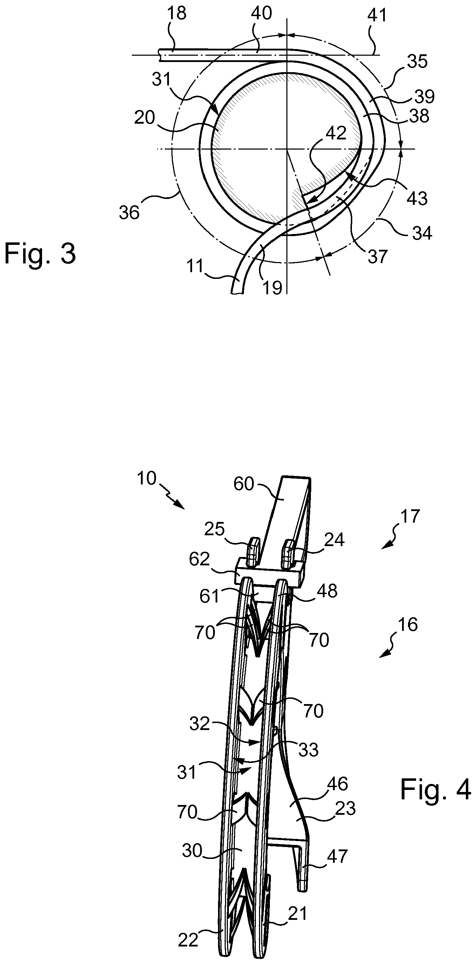

Plus précisément, la gorge annulaire 30 est délimitée par une surface de fond 31 (figures 3 et 4) faisant partie du moyeu 20, par une première surface latérale 32 (figure 4) faisant partie de la première joue 21 et par une seconde surface latérale 33 (figure 4) faisant partie de la seconde joue 22. La première surface latérale 32 et la seconde surface latérale 33 s'étendent chacune entre la surface de fond 31 et la périphérie de l'organe d'immobilisation 16.

Ici, la surface de fond 31 est orientée axialement tandis que la première surface latérale 32 et la seconde surface latérale 33 sont orientées radialement.

La première surface latérale 32 et la seconde surface latérale 33 sont en regard et à distance l'une de l'autre.

Ainsi que montré sur la figure 3, la gorge annulaire 30 comporte un secteur de transition 34, un secteur de maintien 35 et un secteur intermédiaire 36.

Dans le secteur de transition 34, la première joue 21 est interrompue de sorte qu'elle permet au câble 11 de transiter avec un décalage axial entre un emplacement où il est externe à la première joue 21 et un emplacement où il est dans la gorge 30 contre la surface de fond 31.

Dans l'ensemble du secteur de maintien 35 :
- la gorge 30 a une largeur, c'est-à-dire l'écart entre la première surface latérale 32 et la seconde surface latérale 33, qui correspond au diamètre du câble 11, qui est prédéterminé ; et
- la gorge 30 a une profondeur, c'est-à-dire l'écart entre la surface de fond 31 et la périphérie de l'organe d'immobilisation 16, qui est au moins égale à deux fois le diamètre prédéterminé du câble 11.

Ainsi, deux portions du câble 11 disposées dans le secteur de maintien 35 sont forcément superposées.

Ici, le secteur intermédiaire 36 est agencé de la même façon que le secteur de maintien 35.

On va maintenant expliquer comment le câble 11 est reçu dans l'organe d'immobilisation 16.

Entre le côté lâche 19 et le côté tendu 18, le câble 11 comporte successivement une première portion 37 qui passe par le secteur de transition 34 et rejoint le secteur de maintien 35, puis une deuxième portion 38 faisant un tour complet autour du moyeu 20 en étant contre la surface de fond 31 dans le secteur de maintien 35 et dans le secteur intermédiaire 36 puis en longeant la première portion 37 dans le secteur de transition 34, puis une troisième portion 39 recouvrant, dans le secteur de maintien 35, la deuxième portion 38 puis une quatrième portion 40 quittant l'organe d'immobilisation 16, c'est-à-dire rejoignant le côté tendu 18.

Si une traction est exercée sur la quatrième portion 40 dans le sens qui sollicite le câble 11 à s'éloigner de l'organe d'immobilisation 16, et donc du moyeu 20, la troisième portion 39 plaque sur la surface de fond 31 le tronçon de la deuxième portion 38 qui est recouvert par la troisième portion 39.

Ce tronçon de la deuxième portion 38 ainsi plaqué contre la surface de fond 31 ne peut pas glisser vis-à-vis du moyeu 20.

Par conséquent, le câble 11 est immobilisé vis-à-vis de l'organe d'immobilisation 16.

Ici, l'extension angulaire du secteur de maintien 35 est de l'ordre d'un quart de tour.

D'un côté, cette extension angulaire est fixée par la limite avec le secteur de transition 34.

De l'autre côté, ici, l'extension angulaire du secteur de maintien 35 est fixée par l'orientation du côté tendu 18 du câble 11.

Ainsi qu'indiqué ci-dessus, le côté tendu 18 du câble 11, au voisinage de l'organe d'immobilisation 10, est aligné avec l'organe de liaison 17.

Par conséquent, c'est l'emplacement du ou des points de rattachement de l'organe de liaison 17 (délimité ici par les pattes de rattachement 24 et 25) qui fixe l'orientation du câble 11 lorsqu'il quitte l'organe d'immobilisation du côté tendu 18.

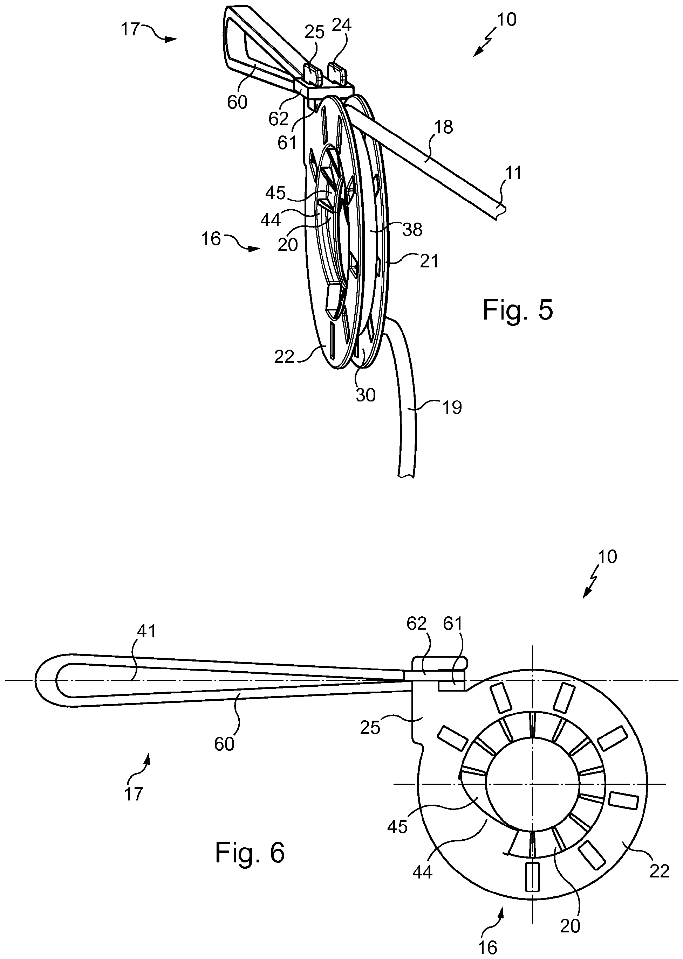

Comme on le voit bien sur la figure 6, la première patte de rattachement 24 et la seconde patte de rattachement 25 ainsi que l'organe de liaison 17 sont ici configurés pour que l'organe de liaison 17 soit orienté suivant une direction prédéterminée 41 passant dans la gorge 30 ; et, comme montré sur la figure 3, la quatrième portion 40 du câble 11 et le côté tendu 18 sont orientés suivant la direction 41.

Du fait que les pattes de rattachement 24 et 25 s'étendent à partir de la périphérie des joues 21 et 22, la direction 41 ne coupe ni la surface de fond 31 ni les surfaces latérales 32 et 33.

Le dispositif d'ancrage 10 offre ainsi une excellente tenue mécanique, en particulier aux vibrations.

Il est rappelé qu'ici le secteur intermédiaire 36 est agencé comme le secteur de maintien 35 et que le câble 11 quitte librement la gorge 30 (il n'y a pas d'élément de guidage du câble 11 le forçant à quitter la gorge 30 à un certain emplacement).

L'extension angulaire du secteur de maintien 35 est ainsi fixée, d'une part, par l'emplacement du ou des points de rattachement de l'organe de liaison 17 (délimité ici par les pattes de rattachement 24 et 25) et, d'autre part, par la limite avec le secteur de transition 34.

En pratique, il est avantageux de configurer l'organe d'immobilisation tel que 16 et l'organe de liaison tel que 17 pour que l'extension angulaire du secteur de maintien tel que 35 soit comprise entre 45° et 135°.

Cette plage de valeurs permet tout à la fois de bien immobiliser le câble tel que 11 et est compatible avec l'orientation habituelle du côté tendu tel que 18 (orientation proche de l'horizontale) et l'orientation habituelle du côté lâche tel que 19 (orientation proche de la verticale).

Dans l'exemple illustré, le câble 11 comporte une âme en fibres optiques et une gaine de protection entourant l'âme. Le rayon de courbure minimal du câble 11 est relativement grand, ici 25 mm.

Afin de respecter ce rayon de courbure minimal, dans le secteur de maintien 35 et dans le secteur intermédiaire 36, la surface de fond 31 est en arc de cercle de plus grand rayon que le rayon minimal de courbure, ici 30 mm.

Pour faciliter le cheminement du câble 11 dans le secteur de transition 34, et aussi pour limiter les risques que le câble 11 se plie selon un rayon de courbure trop petit, la surface de fond 31 de la gorge 30 est, dans le secteur de transition 34, en renfoncement par rapport à la surface de fond 31 dans le secteur de maintien 35 et dans le secteur intermédiaire 36.

Plus précisément, la surface de fond 31 comporte un décrochement 42 à la limite entre le secteur intermédiaire 36 et le secteur de transition 34 ; et une surface incurvée 43 entre le décrochement 42 et la limite avec le secteur de maintien 35.

Comme on le voit bien sur les figures 5 à 7, le moyeu 20 comporte une jante 44 et un voile 45.

La surface de fond 31 est la surface externe de la jante 44, laquelle a une épaisseur sensiblement uniforme.

Le voile 45 est orienté radialement et disposé centré par rapport à la jante 44 à partir de laquelle il s'étend vers le centre de l'organe d'immobilisation 16.

Le voile 45 présente en son centre une ouverture circulaire. Des nervures de renforcement de forme triangulaire sont prévues entre le voile 45 et la jante 44.

La rampe 23 comporte une paroi 46 orientée axialement et une paroi 47 orientée radialement. La paroi 46 est dans le prolongement de la jante 44. La paroi 47 se raccorde à la première joue 21 à la limite entre le secteur de maintien 35 et le secteur de transition 34. A partir de sa jonction avec la première joue 21, la paroi 47 s'incurve vers l'extérieur. La paroi 46 s'étend de la jante 44 au bord de la paroi 47 tournée vers le centre.

La paroi 46 et la paroi 47 s'étendent sur la totalité du secteur de transition 34.

La paroi 46 et la paroi 47 présentent une extrémité libre située à la limite entre le secteur de transition 34 et le secteur intermédiaire 36.

A cette extrémité libre, la largeur de la rampe 23, c'est-à-dire l'écart entre la première joue 21 et la paroi 47, correspond au diamètre prédéterminé du câble 11.

Ainsi, la rampe 23 s'étend sur la totalité du secteur de transition 34, entre la limite avec le secteur angulaire 35, où la paroi 46 rejoint la jante 44 et la paroi 47 rejoint la première joue 21, et la limite avec le secteur intermédiaire 36, où la rampe 23 présente une extrémité libre.

A l'extrémité libre de la rampe 23, sa profondeur, c'est-à-dire l'écart entre la paroi 46 et le bord de la paroi 47 tourné vers la périphérie correspond au diamètre prédéterminé du câble 11.

Le décrochement 42 de la surface de fond 31 est aligné avec l'extrémité libre de la rampe 23. La profondeur du décrochement 42, c'est-à-dire la distance entre son extrémité qui se raccorde à la surface incurvée 43 et son extrémité qui se raccorde à la surface de fond 31 dans le secteur intermédiaire 36, est semblable à la profondeur de la rampe 23 à son extrémité libre.

Le secteur de transition 34 a, dans l'exemple illustré, une extension angulaire de l'ordre de 70°.

En pratique, il est avantageux de configurer l'organe d'immobilisation tel que 16 pour que l'extension angulaire du secteur de transition tel que 34 soit comprise entre 35° et 105°.

Cette plage de valeurs permet un bon cheminement du câble tel que 11 entre le côté externe de la première joue 21 et la surface de fond 31 de la gorge 30 dans le secteur de maintien 35.

On va maintenant décrire la patte de rattachement 24, étant entendu que cette description vaut également pour la patte de rattachement 25 à condition de remplacer la première joue 21 par la seconde joue 22.

La première patte de rattachement 24 s'étend à partir du bord périphérique 48 de la première joue 21 en formant un prolongement de celle-ci, c'est-à-dire que la première patte de rattachement 24 a une surface externe et une surface interne qui sont dans le même plan que la surface interne et la surface externe de la première joue 21.

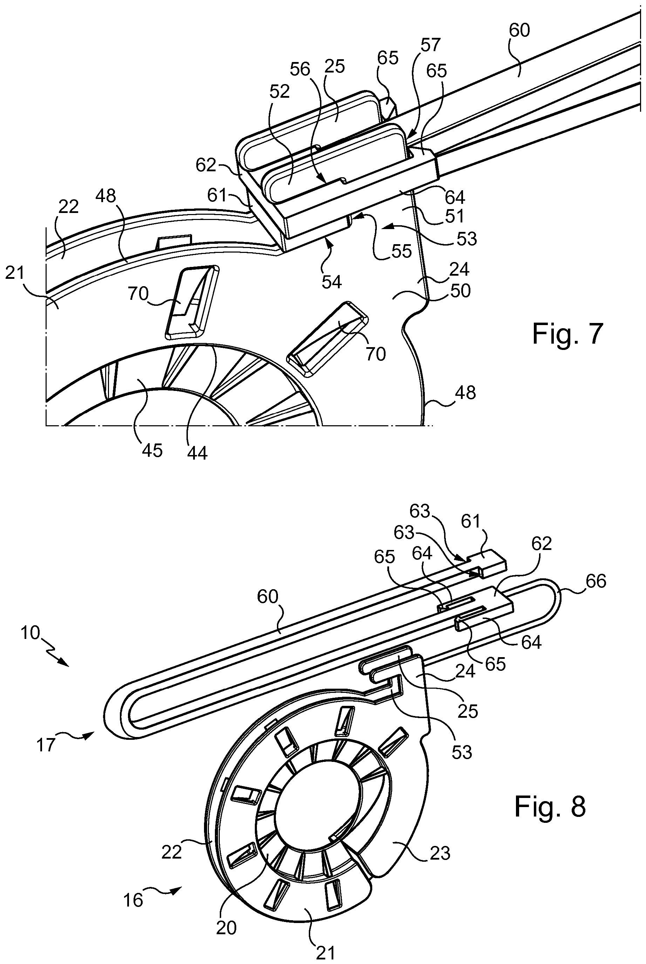

Ainsi que montré sur la figure 7, la première patte de rattachement 24 comporte successivement à partir du bord périphérique 48 de la première joue 21 une base 50, un premier bras 51 et un second bras 52. La première patte de rattachement 24 et le bord périphérique 48 de la première joue 21 délimitent un logement 53 ayant un contour en U dont le côté ouvert est tourné vers le bord périphérique 48.

Plus précisément, le logement 53 présente un premier bord 54 faisant partie de la base 50, un deuxième bord 55 faisant partie du premier bras 51 et un troisième bord 56 faisant partie du second bras 52.

A partir du bord périphérique 48 le pourtour du logement 53 est formé successivement par le premier bord 54, par le deuxième bord 55 et par le troisième bord 56.

Le premier bord 54 et le troisième bord 56 sont orientés parallèlement l'un à l'autre et à la direction 41 (figures 3 et 6). Le deuxième bord 55 est orienté transversalement au premier bord 54 et au troisième bord 56, et donc à la direction 41.

Du côté opposé au deuxième bord 55, le second bras 52 présente un bord 57 orienté parallèlement au deuxième bord 55.

On va maintenant décrire l'organe de liaison 17.

D'une façon générale, l'organe de liaison 17 comporte une bande souple 60 en forme d'épingle à cheveux présentant à l'une de ses extrémités une première tête 61 et à l'autre extrémité une seconde tête 62.

Comme on le voit bien sur la figure 8, la première tête 61 est formée par un bloc de matière de même forme générale que la bande 60 mais plus large, de sorte qu'à la jonction entre la bande 60 et la première tête 61 il existe un épaulement 63 de chaque côté de la bande 60.

La seconde tête 62 comporte un bloc semblable à celui qui forme la première tête 61 et comporte en outre, de chaque côté de la bande 60, un doigt flexible 64 se terminant par un cran d'encliquetage 65.

Pour rattacher l'organe d'immobilisation 16 et l'organe de liaison 17, on met d'abord en place la première tête 61 dans le logement 53 de la première patte de rattachement 24 et dans le logement 53 de la seconde patte de rattachement 25 : chaque épaulement 63 de la tête 61 vient contre le deuxième bord 55 respectivement de la patte 24 et de la patte 25, les portions de la tête 61 en débord de la bande 60 sont en appui contre les bords 54 tandis que la bande 60 passe entre la patte 24 et la patte 25.

Ensuite, la seconde tête 62 est placée dans le logement 53 de chacune des pattes 24 et 25 entre la première tête 61 et les bords 56. Les épaulements de la tête 62 semblables aux épaulements 63 se rapprochent des bords 55 tandis que les doigts flexibles 64 se déforment pour franchir les bras 51 et lorsque les crans d'encliquetage 65 ont franchi les bras 51, les épaulements sont contre le bord 55 et les surfaces droites des crans 65 sont contre le bord 57.

L'organe de liaison 17 et l'organe d'immobilisation 16 sont alors rattachés l'un à l'autre, ni la tête 61 ni la tête 62 ne pouvant se libérer : les crans d'encliquetage 65 empêchent le recul de la tête 62 tandis que la tête 61 est prise en sandwich entre la tête 62 et le bord 54 (l'écartement entre le bord 54 et le bord 56 correspond à la somme de l'épaisseur de la tête 61 et de la tête 62) tandis que le bord périphérique 48 de la première joue 21 et le bord périphérique correspondant de la seconde joue 22, qui sont en saillie par rapport au bord 54, empêchent la tête 61 de reculer.

Pour ancrer le câble 11 au support 12, on met en place le câble 11 dans l'organe d'immobilisation 16 alors que l'organe de liaison 17 n'y est pas rattaché, afin que le câble 11 suive dans la gorge 30 le trajet décrit en détail à l'appui de la figure 3, l'absence de l'organe de liaison 17 permettant au câble 11 de passer entre les pattes de rattachement 24 et 25.

Une fois que le câble 11 a ainsi été mis en place dans l'organe d'immobilisation 16, on met en place les têtes 61 et 62 dans les pattes de rattachement 24 et 25 ainsi qu'il vient d'être expliqué, en ayant fait passer la tête 61 dans un trou 15.

On notera qu'il est également possible d'inverser le positionnement des têtes 61 et 62.

On notera également qu'il est possible d'ajuster la position du câble 11 vis-à-vis de l'organe d'immobilisation 16 en rapprochant le côté tendu 18 de l'organe d'immobilisation 16 et en reprenant le câble 11 du côté lâche 19.

Ainsi que montré sur la figure 8, le dispositif d'ancrage 10 est livré avec l'organe de liaison 17 et l'organe d'immobilisation 16 qui ne sont pas assemblés l'un à l'autre

Par commodité, l'organe de liaison 17 et l'organe d'immobilisation 16 sont reliés par un cordon 66.

Dans une variante non illustrée, l'organe de liaison 17 est remplacé par une anse en fil métallique rigide, avec un corps agencé comme la bande souple 60 et des têtes formées chacune par une extrémité coudée. Chaque logement tel que 53 reçoit l'une des têtes et est conformé de façon appropriée, par exemple avec un fond arrondi comme la section du fil métallique et une orientation inclinée.

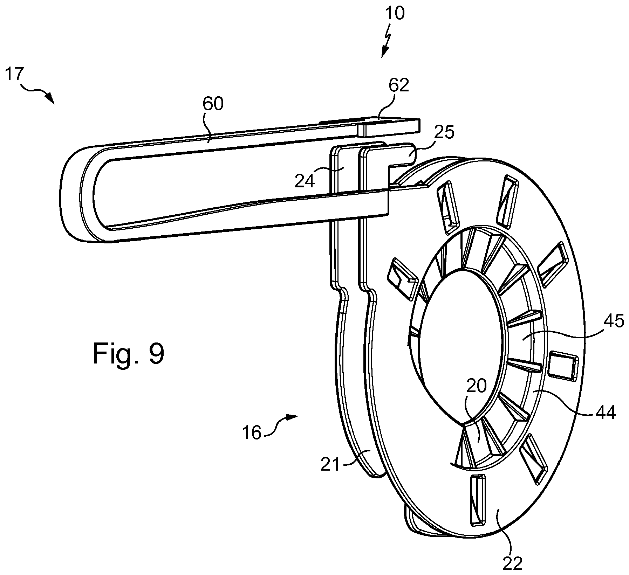

Dans la variante du dispositif d'ancrage 10 illustrée sur la figure 9, la première tête 61 est remplacée par une liaison rigide de l'extrémité correspondante de la bande 60 avec une des pattes de rattachement, ici la seconde patte 25 ; et le premier bord 54 est rapproché du troisième bord 56 de sorte que l'écart entre les bords 54 et 56 correspond à l'épaisseur de la tête 62.

Dans cette variante, le rattachement rigide entre l'une des extrémités de la bande 60 et l'une des pattes de rattachement s'effectue par moulage d'une seule pièce de l'organe d'immobilisation 16 et de l'organe de liaison 17. En d'autres termes, l'extrémité de la bande 60 rattachée rigidement est venue de matière avec l'organe d'immobilisation 16.

Dans une variante semblable, la bande souple 60 rattachée rigidement à l'organe d'immobilisation est remplacée par un crochet rigide.

Dans l'exemple illustré, comme indiqué ci-dessus, le câble 11 a un diamètre prédéterminé auquel correspond la largeur de la gorge 30 (écart entre les surfaces 32 et 33) dans le secteur de maintien 35 tandis que dans ce secteur la profondeur de la gorge 30 (écart entre la surface de fond 31 et la périphérie de l'organe d'immobilisation 16, en pratique le cercle que suit le bord périphérique 48) est d'au moins deux fois ce diamètre prédéterminé.

Pour permettre d'utiliser l'organe d'immobilisation 16 avec un câble dont le diamètre est plus petit que le diamètre prédéterminé, la première joue 21 et la seconde joue 22 comportent dans le secteur de maintien 35, des lamelles flexibles de centrage 70 dirigées chacune vers l'intérieur et vers la surface de fond 31.

Ici, des lamelles flexibles de centrage 70 sont également prévues dans le secteur intermédiaire 36.

Lorsqu'un câble tel que le câble 11 ou un câble de diamètre plus petit est mis en place dans la gorge 30, les lamelles de centrage 70 fléchissent pour laisser ce câble se mettre en place dans la gorge 30.

Lorsque le diamètre du câble est plus petit que le diamètre prédéterminé, les lamelles de centrage 70 centrent le câble de sorte qu'il soit à égale distance de la première surface latérale 32 et de la seconde surface latérale 33.

Les lamelles de centrage 70 s'étendent sur la majeure partie de la profondeur de la gorge 30, de sorte que s'il y a deux portions de câble dans le secteur de maintien 35, ces deux portions de câble sont superposées comme montré sur la figure 3.

Le centrage du câble fourni par les lamelles flexibles de centrage 70 permet d'éviter que des câbles de diamètre plus petit que le diamètre prédéterminé se mettent côte-à-côte, ce qui risquerait de leur permettre de glisser vis-à-vis du moyeu 20 et/ou d'exercer des forces de compression latérales excessives entre eux et sur les joues 21 et 22. Par exemple, si la largeur de la gorge 30 est de l'ordre de 6 à 6,2 mm, les lamelles flexibles de centrage 70 permettent à l'organe d'immobilisation 16 de recevoir des câbles ayant un diamètre compris entre 3 et 6 mm.

Dans une variante non illustrée, les lamelles de centrage telles que 70 sont prévues sur une seule joue.

Dans des variantes non illustrées :
- les dimensions sont différentes de celles mentionnées et illustrées, par exemple le câble a un plus gros diamètre ;
- l'agencement de la surface de fond 31 est différent, par exemple concave plutôt que d'être plat et orienté axialement ; et/ou sans renfoncement au niveau du secteur de transition 34 ;
- les surfaces latérales telles que 32 et 33 sont agencées différemment, par exemple légèrement inclinées vers l'extérieur plutôt que d'être orientées radialement ;
- le secteur intermédiaire tel que 36 est agencé différemment, par exemple avec des joues moins hautes de sorte que la gorge est moins profonde (dans le secteur intermédiaire, une seule portion de câble est disposée dans la gorge) ;
- aucune lamelle de centrage telle que 70 n'est prévue ;
- pour assujettir l'organe d'immobilisation et l'organe de liaison, une seule patte telle que 24 ou 25 est prévue ;
- le rattachement entre l'organe d'immobilisation et l'organe de liaison n'est pas rigide, par exemple grâce à un trou dans l'organe d'immobilisation et grâce à un organe de liaison tel qu'un anneau ouvert rigide ;
- le dispositif d'immobilisation est complété par d'autres éléments que les têtes 61 et 62 pour fermer la gorge 30 une fois que câble y a été mis en place, par exemple par un cavalier assujetti par ses extrémités sur la première joue 21 et sur la seconde joue 22 ; et/ou
- l'une des joues 21 et 22 porte des doigts saillants externes autour desquels le câble peut être enroulé pour lui permettre de se relaxer avant de coopérer avec un organe de connexion.

De nombreuses autres variantes sont possibles en fonction des circonstances, et l'on rappelle à cet égard que l'invention n'est pas limitée aux exemples décrits et représentés.

## Revendications

1. Dispositif d'ancrage pour ancrer un câble (11) de diamètre prédéterminé à un support (12), comportant un organe d'immobilisation pour immobiliser le câble (11) et un organe de liaison (17) pour relier l'organe d'immobilisation au support (12), dans lequel :
- l'organe d'immobilisation (16) présente une gorge de réception du câble (11), orientée radialement et débouchant sur la périphérie de l'organe d'immobilisation (16), laquelle gorge est située autour d'un moyeu (20) et entre une première joue (21) et une seconde joue (22) s'étendant chacune à partir du moyeu (20), laquelle gorge est délimitée par une surface de fond (31) faisant partie du moyeu (20), par une première surface latérale (32) faisant partie de la première joue (21) et s'étendant entre la surface de fond (31) et la périphérie de l'organe d'immobilisation (16) et par une seconde surface latérale (33) faisant partie de la seconde joue (22) et s'étendant entre la surface de fond (31) et la périphérie de l'organe d'immobilisation (16), la première surface latérale (32) et la seconde surface latérale (33) étant en regard et à distance l'une de l'autre ; **caractérisé en ce que** ladite gorge (30) est annulaire et comporte un secteur de maintien (35) et un secteur de transition (34) : dans l'ensemble du secteur de maintien (35) la gorge (30) a une largeur, c'est-à-dire l'écart entre la première surface latérale (32) et la seconde surface latérale (33), qui correspond audit diamètre prédéterminé du câble (11), et dans l'ensemble du secteur de maintien (35) la gorge (30) a une profondeur, c'est-à-dire l'écart entre la surface de fond (31) et la périphérie de l'organe d'immobilisation (16), qui est au moins égale à deux fois ledit diamètre prédéterminé du câble (11), de sorte que deux portions (38, 39) dudit câble (11) disposées dans le secteur de maintien (35) sont superposées ; et dans ledit secteur de transition (34) la première joue (21) est interrompue de sorte qu'elle permet audit câble (11) de transiter avec un décalage axial entre un emplacement où il est externe à la première joue (21) et un emplacement où il est dans la gorge (30) contre la surface de fond (31) ; et
- l'organe d'immobilisation (16) et l'organe de liaison (17) sont configurés pour que l'organe d'immobilisation (16) reçoive ledit câble (11) avec successivement, entre un côté lâche (19) et un côté tendu (18), une première portion (37) qui passe par le secteur de transition (34) et rejoint le secteur de maintien (35), puis une deuxième portion (38) faisant un tour complet autour du moyeu (20) en étant contre la surface de fond (31) dans le secteur de maintien (35), puis dans le secteur de maintien (35) une troisième portion (39) recouvrant la deuxième portion (38) puis une quatrième portion (40) quittant l'organe d'immobilisation (16), grâce à quoi une traction exercée sur la quatrième portion (40) dans le sens qui sollicite le câble (11) à s'éloigner de l'organe d'immobilisation (16), fait que la troisième portion (39) plaque sur la surface de fond (31) le tronçon de la deuxième portion (38) recouvert par la troisième portion (39).

2. Dispositif selon la revendication 1, **caractérisé en ce qu'**au moins dans le secteur de maintien (34) au moins une des première joue (21) et seconde joue (22) comporte des lamelles flexibles de centrage (70) dirigées chacune vers l'intérieur et vers la surface de fond (31), grâce à quoi l'organe d'immobilisation (16) peut immobiliser des câbles dont le diamètre est plus petit que ledit diamètre prédéterminé.

3. Dispositif selon l'une quelconque des revendications 1 ou 2, **caractérisé en ce que** dans l'organe d'immobilisation (16), une patte de rattachement (24, 25) s'étend à partir d'un bord périphérique (48) d'au moins l'une desdites première joue (21) et seconde joue (22).

4. Dispositif selon la revendication 3, **caractérisé en ce que** dans l'organe d'immobilisation (16), une patte de rattachement (24, 25) s'étend à partir d'un bord périphérique (48) de chacune desdites première joue (21) et seconde joue (22).

5. Dispositif selon l'une quelconque des revendications 3 ou 4, **caractérisé en ce que** l'organe de liaison (17) et chaque dite patte de rattachement (24, 25) sont configurés pour que l'organe de liaison (17) soit orienté vis-à-vis de l'organe d'immobilisation (16) suivant une direction prédéterminée (41) passant dans ladite gorge (30).

6. Dispositif selon la revendication 5, **caractérisé en ce que** ledit organe de liaison (17) comporte un corps (60) en forme d'épingle à cheveux présentant à l'une de ses extrémités une première tête (61) et à l'autre extrémité une seconde tête (62) ; et chaque dite patte de rattachement (24, 25) forme un logement (53) pour recevoir la première tête (61) et la seconde tête (62).

7. Dispositif selon l'une quelconque des revendications 1 à 6, **caractérisé en ce que** ledit secteur de maintien (35) a une extension angulaire comprise entre 45° et 135°.

8. Dispositif selon l'une quelconque des revendications 1 à 7, **caractérisé en ce que** le dispositif d'immobilisation (16) comporte une rampe (23) le long dudit secteur de transition (34).

9. Dispositif selon la revendication 8, **caractérisé en ce que** ladite rampe (23) comporte une paroi (47) orientée radialement qui se raccorde à la première joue (21) à la limite entre le secteur de maintien (35) et le secteur de transition (34), laquelle paroi (47) s'incurve vers l'extérieur à partir de sa jonction avec la première joue (21).

10. Dispositif selon la revendication 9, **caractérisé en ce que** ladite rampe (23) comporte une paroi (46) orientée axialement entre ledit moyeu (20) et ladite paroi (47) orientée radialement.

11. Dispositif selon l'une quelconque des revendications 1 à 10, **caractérisé en ce que** ladite surface de fond (31) de la gorge (30) présente un renfoncement dans ledit secteur de transition (34).

12. Dispositif selon l'une quelconque des revendications 1 à 11, **caractérisé en ce que** ledit secteur de transition (34) a une extension angulaire comprise entre 35° et 105°.

## Patentansprüche

1. Verankerungsvorrichtung zum Verankern eines Kabels (11) mit vorbestimmtem Durchmesser an einer Halterung (12), umfassend ein Festlegungsorgan zum Festlegen des Kabels (11) und ein Verbindungsorgan (17) zum Verbinden des Festlegungsorgans mit der Halterung (12), wobei
- das Festlegungsorgan (16) eine Aufnahmenut zum Aufnehmen des Kabels (11) aufweist, die radial ausgerichtet ist und am Umfang des Festlegungsorgans (16) ausmündet, wobei die Nut um eine Nabe (20) herum und zwischen einem ersten Seitenteil (21) und einem zweiten Seitenteil (22) liegt, die sich jeweils ausgehend von der Nabe (20) erstrecken, wobei die Nut von einer Nutgrundfläche (31), die zur Nabe (20) gehört, von einer ersten Seitenfläche (32), die zum ersten Seitenteil (21) gehört und sich zwischen der Nutgrundfläche (31) und dem Umfang des Festlegungsorgans (16) erstreckt, und von einer zweiten Seitenfläche (33) eingegrenzt ist, die zum zweiten Seitenteil (22) gehört und sich zwischen der Nutgrundfläche (31) und dem Umfang des Festlegungsorgans (16) erstreckt, wobei die erste Seitenfläche (32) und die zweite Seitenfläche (33) einander gegenüberliegen und voneinander beabstandet sind; **dadurch gekennzeichnet, dass** die Nut (30) ringförmig ist und einen Haltesektor (35) und einen Übergangssektor (34) aufweist; wobei im gesamten Haltesektor (35) die Nut (30) eine Breite, d.h. einen Abstand zwischen der ersten Seitenfläche (32) und der zweiten Seitenfläche (33), aufweist, der dem vorbestimmten Durchmesser des Kabels (11) entspricht, und in dem gesamten Haltesektor (35) die Nut (30) eine Tiefe, d.h. einen Abstand zwischen der Nutgrundfläche (31) und dem Umfang des Festlegungsorgans (16), aufweist, der zumindest gleich dem zweifachen vorbestimmten Durchmesser des Kabels (11) ist, so dass zwei in dem Haltesektor (35) angeordnete Abschnitte (38, 39) des Kabels (11) übereinanderliegen; und in dem Übergangssektor (34) das erste Seitenteil (21) unterbrochen ist, so dass es dem Kabel (11) gestattet, mit einem axialen Versatz zwischen einer Stelle, wo es außerhalb des ersten Seitenteils (21) liegt, und einer Stelle durchgeführt zu werden, wo es in der Nut (30) an der Nutgrundfläche (31) liegt; und
- das Festlegungsorgan (16) und das Verbindungsorgan (17) so ausgelegt sind, dass das Festlegungsorgan (16) das Kabel (11) zwischen einer lockeren Seite (19) und einer gespannten Seite (18) aufeinanderfolgend mit einem ersten Abschnitt (37), der durch den Übergangssektor (34) geht und auf den Haltesektor (35) trifft, dann einem zweiten Abschnitt (38), der vollständig um die Nabe (20) umläuft und dabei an der Nutgrundfläche (31) in dem Haltesektor (35) anliegt, dann in dem Haltesektor (35) einem dritten Abschnitt (39), der den zweiten Abschnitt (38) überdeckt, dann einem vierten Abschnitt (40), der das Festlegungsorgan (16) verlässt, aufnimmt, wodurch eine auf den vierten Abschnitt (40) in derjenigen Richtung ausgeübte Zugkraft, in welcher das Kabel (11) zum Entfernen von dem Festlegungsorgan (16) beaufschlagt wird, bewirkt, dass der dritte Abschnitt (39) den Teilbereich des zweiten Abschnitts (38), der von dem dritten Abschnitt (39) überdeckt wird, an die Nutgrundfläche (31) drückt.

2. Vorrichtung nach Anspruch 1, **dadurch gekennzeichnet, dass** zumindest in dem Haltesektor (34) zumindest eines aus erstem Seitenteil (21) und zweitem Seitenteil (22) biegsame Zentrierlamellen (70) aufweist, die jeweils nach innen und zur Nutgrundfläche (31) hin gerichtet sind, wodurch das Festlegungsorgan (16) Kabel festlegen kann, deren Durchmesser kleiner ist als der vorbestimmte Durchmesser.

3. Vorrichtung nach einem der Ansprüche 1 oder 2, **dadurch gekennzeichnet, dass** in dem Festlegungsorgan (16) eine Anbindungslasche (24, 25) sich ausgehend von einem Umfangsrand (48) von zumindest einem aus erstem Seitenteil (21) und zweitem Seitenteil (22) erstreckt.

4. Vorrichtung nach Anspruch 3, **dadurch gekennzeichnet, dass** in dem Festlegungsorgan (16) eine Anbindungslasche (24, 25) sich ausgehend von einem Umfangsrand (48) von einem jeden aus erstem Seitenteil (21) und zweitem Seitenteil (22) erstreckt.

5. Vorrichtung nach einem der Ansprüche 3 oder 4, **dadurch gekennzeichnet, dass** das Verbindungsorgan (17) und jede Anbindungslasche (24, 25) dazu ausgelegt sind, dass das Verbindungsorgan (17) bezüglich des Festlegungsorgans (16) in einer vorbestimmten Richtung (41) ausgerichtet ist, die in die Nut (30) übergeht.

6. Vorrichtung nach Anspruch 5, **dadurch gekennzeichnet, dass** das Verbindungsorgan (17) einen haarklammerartigen Körper (60) aufweist, der an einem seiner Enden einen ersten Kopf (61) und an dem anderen Ende einen zweiten Kopf (62) enthält; und jede Anbindungslasche (24, 25) eine Aufnahmeausnehmung (53) zum Aufnehmen des ersten Kopfes (61) und des zweiten Kopfes (62) bildet.

7. Vorrichtung nach einem der Ansprüche 1 bis 6, **dadurch gekennzeichnet, dass** der Haltesektor (35) eine Winkelerstreckung zwischen 45° und 135° aufweist.

8. Vorrichtung nach einem der Ansprüche 1 bis 7, **dadurch gekennzeichnet, dass** die Festlegungsvorrichtung (16) eine Rampe (23) entlang des Übergangssektors (34) aufweist.

9. Vorrichtung nach Anspruch 8, **dadurch gekennzeichnet, dass** die Rampe (23) eine radial ausgerichtete Wand (47) umfasst, die sich an das erste Seitenteil (21) an der Grenze zwischen dem Haltesektor (35) und dem Übergangssektor (34) anschließt, welche Wand (47) sich ausgehend von ihrer Verbindung mit dem ersten Seitenteil (21) nach außen krümmt.

10. Vorrichtung nach Anspruch 9, **dadurch gekennzeichnet, dass** die Rampe (23) eine axial ausgerichtete Wand (46) zwischen der Nabe (20) und der radial ausgerichteten Wand (47) umfasst.

11. Vorrichtung nach einem der Ansprüche 1 bis 10, **dadurch gekennzeichnet, dass** die Nutgrundfläche (31) der Nut (30) eine Vertiefung in dem Übergangssektor (34) aufweist.

12. Vorrichtung nach einem der Ansprüche 1 bis 11, **dadurch gekennzeichnet, dass** der Übergangssektor (34) eine Winkelerstreckung zwischen 35° und 105° aufweist.

## Claims

1. Anchoring device for anchoring a cable (11) with a predetermined diameter to a support (12), comprising a lockout element for locking out the cable (11) and a connection element (17) for connecting the lockout element to the support (12), wherein:
- the lockout element (16) has a groove for housing the cable (11), radially oriented and leading to the periphery of the lockout element (16), said groove is located around a hub (20) and between a first side panel (21) and a second side panel (22) each one extending from the hub (20), said groove is delimited by a bottom surface (31) forming part of the hub (20), by a first lateral surface (32) forming part of the first side panel (21) and extending between the bottom surface (31) and the periphery of the lockout element (16) and by a second lateral surface (33) forming part of the second side panel (22) and extending between the bottom surface (31) and the periphery of the lockout element (16), the first lateral surface (32) and the second lateral surface (33) being opposite each other and at a distance from each other; **characterised in that** said groove (30) is annular and comprises a hold sector (35) and a transition sector (34): throughout the hold sector (35) the groove (30) has a width, that is to say the distance between the first lateral surface (32) and the second lateral surface (33), which corresponds to said predetermined diameter of the cable (11), and throughout the hold sector (35) the groove (30) has a depth, that is to say the distance between the bottom surface (31) and the periphery of the lockout element (16), which is at least equal to two times the abovementioned predetermined diameter of the cable (11), so that two portions (38, 39) of said cable (11) arranged in the hold sector (35) are superimposed; and in said transition sector (34) the first side panel (21) is interrupted so that it allows said cable (11) to transit with an axial shift between a location where it is outside the first side panel (21) and a location where it is inside the groove (30) against the bottom surface (31); and
- the lockout element (16) and the connection element (17) are configured so that the lockout element (16) houses said cable (11) with, successively, between a loose side (19) and a tight side (18), a first portion (37) which passes through the transition sector (34) and joins the hold sector (35), then a second portion (38) doing a full turn around the hub (20) while being against the bottom surface (31) in the hold sector (35), then in the hold sector (35) a third portion (39) covering the second portion (38), then a fourth portion (40) leaving the lockout element (16), thanks to which a traction applied on the fourth portion (40) in the direction that stresses the cable (11) on moving away from the lockout element (16), makes the third portion (39) press against the bottom surface (31) the segment of the second portion (38) overlaid by the third portion (39).

2. Device according to claim 1, **characterised in that**, at least in the hold sector (34), at least one of the first (21) and second (22) side panels have flexible centring strips (70) each directed towards the inside and towards the bottom surface (31), thanks to which the lockout element (16) can lock out cables whose diameter is smaller than said predetermined diameter.

3. Device according to one of claims 1 or 2, **characterised in that**, in the lockout element (16), a joining leg (24, 25) extends from one peripheral edge (48) of at least one of said first (21) and second (22) side panels.

4. Device according to claim 3, **characterised in that**, in the lockout element (16), a joining leg (24, 25) extends from one peripheral edge (48) of each said first (21) and second (22) side panels.

5. Device according to one of claims 3 or 4, **characterised in that** the connection element (17) and each said joining leg (24, 25) are configured so that the connection element (17) is oriented towards the lockout element (16) following a predetermined direction (41) passing through said groove (30).

6. Device according to claim 5, **characterised in that** said connection element (17) has a body (60) in the shape of a hairpin, having at one of its ends a first head (61) and at the other a second head (62); and each said joining leg (24, 25) forms a housing (53) for housing the first head (61) and the second head (62).

7. Device according to one of claims 1 to 6, **characterised in that** said hold sector (35) has an angular extent of between 45° and 135°.

8. Device according to one of claims 1 to 7, **characterised in that** the lockout element (16) has a ramp (23) along said transition sector (34).

9. Device according to claim 8, **characterised in that** said ramp (23) has a radially oriented wall (47) which is connected to the first side panel (21) at the limit between the hold sector (35) and the transition sector (34), said wall (47) being curved towards the outside from its junction with the first side panel (21).

10. Device according to claim 9, **characterised in that** said ramp (23) has an axially oriented wall (46) between said hub (20) and said radially oriented wall (47).

11. Device according to one of claims 1 to 10, **characterised in that** said bottom surface (31) of the groove (30) has an indent in said transition sector (34).

12. Device according to one of claims 1 to 11, **characterised in that** said transition sector (34) has an angular extent of between 35° and 105°.
